# FASCICULE DE BREVET EUROPEEN

(11) **EP 2 231 518 B1**
(45) Date de publication et mention de la délivrance du brevet: **03.08.2011**
(21) Numéro de dépôt: 08867613.5
(22) Date de dépôt: 24.12.2008
(51) Int. Cl.: C01B 33/037, C01B 33/02, C30B 29/06, C30B 11/00

(54) **INSTALLATION DE PURIFICATION D'UN MATERIAU SEMICONDUCTEUR A TORCHE A PLASMA**
VORRICHTUNG MIT PLASMABRENNER ZUR REINIGUNG EINES HALBLEITERMATERIALS
APPARATUS INCLUDING A PLASMA TORCH FOR PURIFYING A SEMICONDUCTOR MATERIAL

(30) Priorité: 27.12.2007 FR 0760405
(43) Date de publication de la demande: 29.09.2010
(73) Titulaire: EFD Induction SA, 38170 Seyssinet Pariset (FR); Commissariat à l'Énergie Atomique et aux Énergies Alternatives, 75015 Paris (FR); Centre National de la Recherche Scientifique, 75794 Paris Cedex 16 (FR); FERROPEM, 73000 Chambery (FR)
(72) Inventeur: RIVAT, Pascal, F-38590 Saint Etienne de Saint Geoirs (FR); FLAHAUT, Emmanuel, F-73190 Puygros (FR); TRASSY, Christian, F-38100 Grenoble (FR); COCCO, François, 73230 Barby (FR); GROSSIER, Etienne, F-38450 Saint Georges de Commiers (FR)
(74) Mandataire: de Beaumont, Michel
(86) Numéro de dépôt international: PCT/FR2008/052415
(87) Numéro de publication internationale: WO 2009/083694

(56) Documents cités:
- JP-A- 2001 019 594
- JP-A- 2007 314 403

## Description

### Domaine de l'invention

La présente invention concerne une installation de purification d'un matériau semiconducteur, notamment la purification de silicium pour constituer des cellules de production d'énergie électrique par effet photovoltaïque.

### Exposé de l'art antérieur

Actuellement, le silicium destiné aux techniques photovoltaïques est essentiellement constitué des rebuts de l'industrie microélectronique, car le silicium utilisé pour des applications photovoltaïques peut contenir une proportion d'impuretés (de l'ordre de 10⁻⁶) moins critique que le niveau d'impuretés (10⁻⁹) généralement requis en microélectronique.

Il serait souhaitable de disposer d'une autre source de silicium pour produire du silicium adapté aux produits photovoltaïques. En particulier, les rebuts de l'industrie microélectrique tendent à devenir insuffisants pour satisfaire les besoins des techniques photovoltaïques.

Actuellement, on cherche à affiner le silicium fabriqué pour des applications métallurgiques pour obtenir du silicium d'une pureté adaptée aux techniques photovoltaïques. Le silicium utilisé en métallurgie peut contenir plusieurs pourcents d'impuretés telles que le fer, le titane, le bore, le phosphore, etc.

Pour retirer certaines des impuretés d'un matériau semiconducteur, notamment le bore, une possibilité consiste à faire fondre des blocs du matériau semiconducteur dans un creuset et à purifier le matériau semiconducteur fondu en utilisant une torche à plasma dont la flamme lèche la surface libre du bain du matériau semiconducteur. La purification du matériau semiconducteur est obtenue par l'introduction de gaz réactifs dans le plasma qui réagissent avec des impuretés présentes dans le matériau semiconducteur fondu de façon à former des composés gazeux. Les gaz réactifs peuvent, en outre, réagir avec le matériau semiconducteur pour former des composés gazeux, par exemple de l'oxyde de silicium (SiO₂, SiO), lorsque le matériau semiconducteur est le silicium. Il est nécessaire d'évacuer les composés gazeux issus de la purification du matériau semiconducteur et les particules formées par condensation de ces composés pour éviter qu'ils ne polluent à nouveau le matériau semiconducteur.

De façon générale, le système de purification est disposé dans une enceinte dans laquelle est réalisée une atmosphère d'un gaz neutre, ou d'un mélange de gaz neutres, par exemple de l'argon ou de l'hélium. Pour évacuer les composés gazeux issus de la purification du matériau semiconducteur, et les particules formées par condensation de ces composés, une possibilité consiste à renouveler régulièrement l'atmosphère de l'enceinte. Un inconvénient d'un tel procédé est qu'il nécessite des quantités importantes de gaz, ce qui présente un coût élevé.

Le brevet FR 2 869 028 au nom de EFD décrit une installation de fabrication de blocs d'un matériau semiconducteur, comprenant un système de confinement adapté, lors de l'étape de purification, à délimiter, au niveau de la surface libre du matériau semiconducteur fondu, une partie de l'atmosphère de l'enceinte, appelée volume de confinement, dans laquelle sont confinés les composés gazeux issus de la purification du matériau semiconducteur et les particules formées par condensation de ces composés. L'évacuation des composés gazeux et des particules correspondantes est alors réalisée uniquement au niveau du volume de confinement. Pour ce faire, le système de confinement peut comprendre une ou plusieurs bouches d'aspiration débouchant dans le volume de confinement, l'atmosphère dans le volume de confinement étant renouvelée par du gaz neutre provenant du reste de l'enceinte. Un avantage est que seul le volume de confinement est pollué par les composés gazeux issus de la purification du matériau semiconducteur et par les particules formées par condensation de ces composés, et que seule une faible quantité du gaz neutre, ou du mélange de gaz neutres, doit être régulièrement renouvelée dans l'enceinte.

Un inconvénient d'une telle installation est que l'atmosphère dans le volume de confinement est très fortement chargée en composés gazeux qui se condensent en particules, dont le diamètre peut varier de quelques micromètres à quelques millimètres, et qui peuvent rester en suspension dans le volume de confinement ou se déposer sur les parois du système de confinement. La formation de particules dans le volume de confinement est d'autant plus importante que la différence entre la température des parois internes du système de confinement et la température de condensation des composés gazeux est élevée. On peut atteindre des densités de particules importantes dans le volume de confinement. Avec de telles densités, il s'avère difficile d'assurer une aspiration convenable des composés gazeux et des particules présents dans le volume de confinement tout en réduisant le plus possible le renouvellement du volume de confinement en gaz neutre, ou en mélange de gaz neutres.

La condensation des composés gazeux et/ou le dépôt des particules en suspension sur les parois du système de confinement peuvent conduire à l'obturation partielle ou complète des bouches d'aspiration du système de confinement. Il est alors nécessaire de nettoyer fréquemment le système de confinement, ce qui présente un coût élevé, surtout si le système de confinement doit être démonté pour être nettoyé. Il est également fait référence aux documents JP-A-20010109594 et JP-A-2007314403.

### Résumé de l'invention

La présente invention vise une installation de purification d'un matériau semiconducteur, notamment du silicium, comprenant une torche à plasma et un système de confinement des composés gazeux et des particules en suspension issus de la purification du matériau semiconducteur, dans laquelle la condensation des composés gazeux et/ou le dépôt de particules sur les parois du système de confinement, susceptibles de dégrader le fonctionnement de l'installation, sont réduits.

Selon un autre objet, l'installation a une structure particulièrement simple et présente un encombrement réduit.

Selon un autre objet, l'installation permet, en outre, le nettoyage en continu du système d'aspiration des composés gazeux et des particules présents dans le volume de confinement.

Pour atteindre tout ou partie de ces objets ainsi que d'autres, un aspect de la présente invention prévoit une installation de purification d'un matériau semiconducteur comprenant au moins une enceinte contenant une atmosphère d'au moins un gaz neutre. L'installation comprend dans l'enceinte un creuset destiné à contenir le matériau semiconducteur à l'état fondu ; une torche à plasma destinée à éliminer des impuretés du matériau semiconducteur fondu dans le creuset ; et un système de confinement destiné à délimiter un volume de confinement entre le creuset et la torche à plasma, le système de confinement comprenant un système d'évacuation de composés gazeux et/ou de particules issus de la purification du silicium fondu. Le système d'évacuation comprend au moins une ouverture d'aspiration ayant une portion cylindrique se prolongeant par une portion évasée débouchant dans le volume de confinement.

Selon un exemple de réalisation, l'installation comprend un système de nettoyage de l'ouverture d'aspiration adapté à réaliser une opération de nettoyage de l'ouverture pendant le fonctionnement de la torche à plasma.

Selon un exemple de réalisation, le système de confinement comprend une première portion annulaire à la périphérie du volume de confinement, comprenant une paroi latérale interne, la portion évasée débouchant au niveau de la paroi latérale interne.

Selon un exemple de réalisation, l'installation comprend un tube creux prolongeant l'ouverture du côté opposé à la portion évasée, la longueur du tube étant supérieure au diamètre de la portion annulaire.

Selon un exemple de réalisation, la torche à plasma est orientée selon une première direction, le tube étant rectiligne et s'étendant selon une seconde direction inclinée par rapport à la première direction d'un angle compris entre 20° et 90°.

Selon un exemple de réalisation, l'enceinte comprend un couvercle, la première portion annulaire ayant une face du côté opposé au couvercle, l'installation comprenant des griffes réparties à la périphérie externe de la première portion annulaire, chaque griffe étant fixée à ladite face et au couvercle.

Selon un exemple de réalisation, le système de confinement comprend, en outre, une deuxième portion annulaire d'un premier matériau entourant la torche à plasma ; et une troisième portion annulaire d'un second matériau différent du premier matériau, entourant la deuxième portion annulaire et comprenant une paroi destinée à être en vis-à-vis du matériau semiconducteur, la première portion annulaire entourant la troisième portion annulaire.

Selon un exemple de réalisation, la troisième portion annulaire est constituée d'au moins deux secteurs reliés l'un à l'autre.

Selon un exemple de réalisation, la portion évasée est tangente au plan contenant la paroi de la troisième portion annulaire.

Selon un exemple de réalisation, la portion évasée est partout tangente à la paroi interne de la première portion annulaire à l'exception des parties les plus proche et éloignée de la paroi de la troisième portion annulaire.

### Brève description des dessins

Ces objets, caractéristiques et avantages, ainsi que d'autres seront exposés en détail dans la description suivante d'un mode de réalisation particulier faite à titre non-limitatif en relation avec les figures jointes parmi lesquelles :
la figure 1 est une vue de face avec coupe partielle d'un exemple de réalisation d'une installation de purification d'un matériau semiconducteur selon l'invention ;
la figure 2 est une vue agrandie d'une partie de la coupe de la figure 1 ;
les figures 3 et 4 sont respectivement une vue de dessous et une coupe de face d'un élément du système de confinement de l'installation de purification de la figure 1 ;
les figures 5, 6 et 7 sont des vues de détail en coupe et en perspective de l'élément de la figure 3 ;
la figure 8 est une vue en perspective éclatée d'autres éléments du système de confinement de l'installation de la figure 1 ; et
la figure 9 est une coupe de face des éléments de la figure 8.

### Description détaillée

De mêmes éléments ont été désignés par de mêmes références aux différentes figures. Pour des raisons de clarté, seuls les éléments de l'installation qui sont nécessaires à la compréhension de l'invention ont été représentés aux différentes figures. Dans la suite de la description, les qualificatifs "inférieur", "supérieur", "vers le haut" et "vers le bas" sont utilisés en relation avec un axe D, considéré comme étant vertical. Toutefois, il est clair que l'axe D peut être légèrement incliné par rapport à la verticale.

Un exemple d'installation de purification d'un matériau semiconducteur va maintenant être décrit pour la purification du silicium, notamment pour l'obtention de blocs de silicium présentant un degré de pureté suffisant pour une utilisation directe pour la réalisation de produits photovoltaïques et/ou l'obtention de blocs de silicium ayant un degré de pureté inférieur au niveau requis pour une utilisation directe pour la réalisation de produits photovoltaïques et destinés à être traités ultérieurement pour présenter un degré de pureté suffisant pour les techniques photovoltaïques.

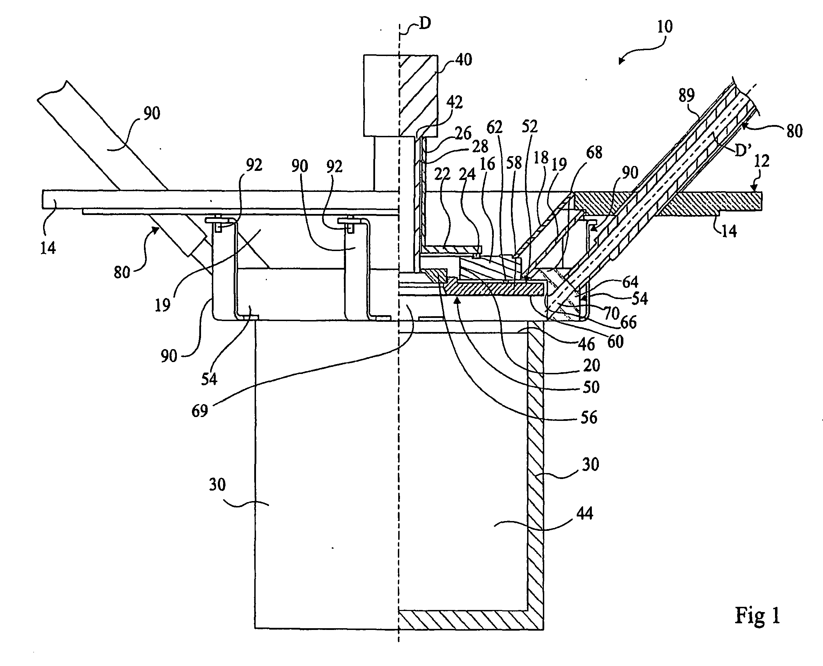

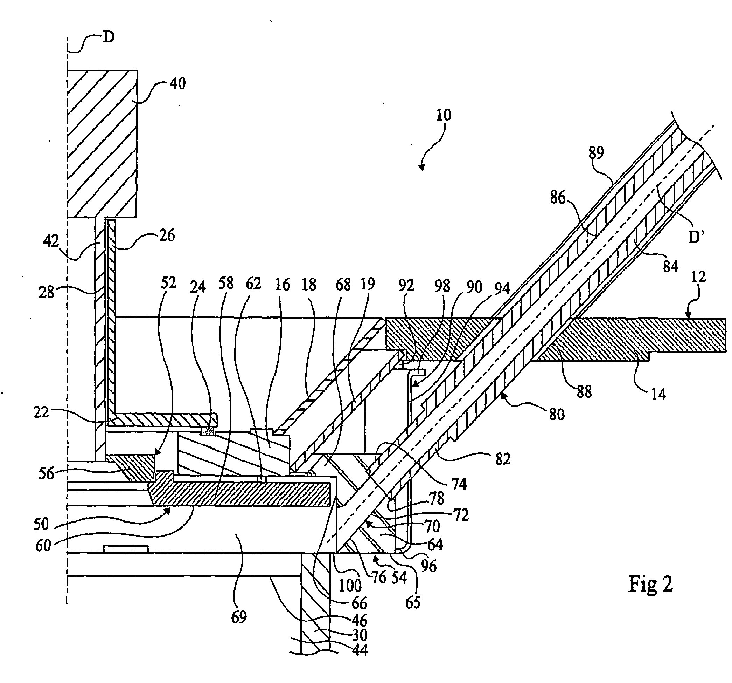

La figure 1 représente certains éléments d'un exemple de réalisation d'une installation 10 de fabrication de blocs de silicium. Sur la partie gauche de la figure 1, l'installation 10 est représentée en vue de face et sur la partie droite de la figure 1, l'installation 10 est représentée en coupe selon un plan comprenant l'axe D. La figure 2 est une coupe de détail de l'installation 10. L'installation comprend une enceinte comportant, par exemple, une paroi latérale, non représentée, fermée à son extrémité supérieure par un couvercle 12. Une ouverture, non représentée, peut être prévue au travers de la paroi latérale de l'enceinte et permettre de faire communiquer le volume interne de l'enceinte avec l'extérieur. L'installation peut comprendre une porte étanche au niveau de l'ouverture pour isoler hermétiquement le volume interne de l'enceinte. Selon une variante, l'enceinte peut communiquer avec une enceinte secondaire, jouant, par exemple, le rôle d'un sas d'entrée/sortie pour l'introduction ou le retrait d'objets dans l'installation.

Le couvercle 12 est constitué de plusieurs pièces à symétrie de révolution autour de l'axe D. Selon le présent exemple de réalisation, le couvercle 12 comprend une portion annulaire externe 14 et une portion annulaire interne 16 reliées entre elles par deux parois tronconiques 18, 19 parallèles. La portion annulaire interne 16 est à une position inférieure selon l'axe D par rapport à la portion annulaire externe 14. La portion annulaire interne 16 définit une ouverture centrale 20. L'ouverture 20 est partiellement occultée par une plaque annulaire 22 qui recouvre partiellement la portion annulaire interne 16, un joint d'étanchéité 24 étant disposé entre la plaque 22 et la portion annulaire interne 16. La plaque annulaire 22 se prolonge par une portion cylindrique 26 d'axe D, s'étendant vers le haut et délimitant une ouverture 28.

Une atmosphère d'un gaz neutre, ou d'un mélange de gaz neutres, par exemple de l'argon, de façon avantageuse à une pression légèrement supérieure à la pression atmosphérique, est maintenue, en fonctionnement, dans l'enceinte pour éviter la pénétration d'oxygène dans l'enceinte. L'installation 10 comprend un système, non représenté, de renouvellement de l'atmosphère dans l'enceinte.

Un creuset 30 est disposé dans l'enceinte. Il s'agit, par exemple, d'un creuset à base de silice ou de graphite. Le creuset 30 peut être à base circulaire ou rectangulaire. Il s'agit, par exemple, d'un creuset du type creuset chaud ou creuset froid, constitué, par exemple, d'un creuset à base de graphite mélangé à de l'argile ou à base de carbure de silicium pourvu d'un contre-creuset intérieur à base de silice. Selon un autre exemple, il s'agit d'un creuset en quartz revêtu à l'intérieur de nitrure de silicium. Il peut également s'agir du creuset décrit dans la demande de brevet US 2006/0144326 déposée aux noms d'Appolon, Solar, de Cyberstar et d'EFD. Dans la suite de la description, on considère un creuset 30 cylindrique dont le diamètre externe peut atteindre plusieurs dizaines voire une centaine de centimètres.

L'installation 10 peut comprendre un système de déplacement, non représenté, du creuset 30 dans l'enceinte. A titre d'exemple, le système de déplacement peut correspondre à un élévateur constitué d'un plateau sur lequel est disposé le creuset 30 et susceptible d'être déplacé dans l'enceinte selon la direction verticale par l'intermédiaire d'un système d'entraînement. L'élévateur peut être commandé automatiquement, par exemple par un programme de commande prémémorisé. Selon une variante, le système de déplacement peut correspondre à un bras robotisé.

L'installation 10 peut comprendre un système de chauffage, non représenté, du creuset 30 adapté à faire fondre des morceaux de silicium disposés dans le creuset 30. Il s'agit, par exemple, d'un système de chauffage comprenant une bobine d'induction latérale entourant le creuset 30.

Une torche à plasma inductif 40, non représentée en détail, est disposée à l'aplomb du creuset 30. La torche à plasma inductif 40 est associée à un injecteur de gaz réactifs (non représenté) tel que de l'hydrogène, de l'oxygène, du chlore, de l'azote, etc. La torche à plasma inductif 40 comprend une buse 42 cylindrique, d'axe D, qui s'étend dans l'ouverture 28 délimitée par la paroi cylindrique 26 et se projette vers le bas au-delà de l'ouverture 28, dans l'ouverture 20 délimitée par la paroi annulaire interne 16.

L'installation 10 comprend un système d'alimentation, non représenté, du creuset 30 en morceaux de silicium métallurgique, par exemple sous la forme de granules. Il peut s'agir d'une trémie escamotable. La référence 44 désigne le bain de silicium contenu dans le creuset 30 et la référence 46 désigne la surface supérieure libre du bain de silicium 44.

L'enceinte comprend un système de confinement 50, à l'intérieur de l'enceinte, qui se compose d'un écran de protection 52 et d'une couronne d'aspiration 54. L'écran de protection 52 comprend une partie annulaire interne 56, appelé insert, d'axe D et entourant l'extrémité de la buse 42 de la torche à plasma 40, et une partie annulaire externe 58, appelée déflecteur, d'axe D et entourant l'insert 56. Le déflecteur 58 comprend une face sensiblement plane 60, perpendiculaire à l'axe D, et opposée à la surface libre 46 du bain de silicium 44 contenu dans le creuset 30. Le déflecteur 58 est relié à la portion annulaire interne 16 du couvercle 12 par des vis 62 comme cela sera décrit plus en détail par la suite, une seule vis 62 étant représentée aux figures 1 et 2. La couronne d'aspiration 54 comprend un corps annulaire 64 comprenant une face inférieure plane 65 et une paroi latérale intérieure 66 cylindrique d'axe D, le diamètre de la paroi 66 étant légèrement supérieur au diamètre externe du creuset 30. Le corps annulaire 64 comprend, en partie supérieure, un rebord 68 qui s'étend vers l'axe D en recouvrant partiellement le déflecteur 58. La couronne d'aspiration 54, le déflecteur 58, l'insert 56 et le creuset 30 définissent un volume de confinement 69 en partie supérieure du creuset 30 lorsque le creuset 30 est à proximité de la couronne d'aspiration 54. A titre d'exemple, la hauteur selon l'axe D de la couronne d'aspiration 54 est de plusieurs centimètres.

Le corps 64 de la couronne d'aspiration 54 est traversé par des ouvertures 70, une seule ouverture 70 étant représentée aux figures 1 et 2. Chaque ouverture 70 comprend une portion centrale cylindrique 72, d'axe D', qui se prolonge d'un côté par une portion cylindrique 74 de plus grand diamètre, d'axe D', et du côté opposé par une portion évasée 76. La portion cylindrique 74 est reliée à la portion cylindrique 72 par un épaulement 78 et débouche au niveau du bord supérieur externe du corps 64. La portion évasée 76 débouche sur la paroi latérale interne 66 du corps 64 et est sensiblement tangente au bord inférieur de la paroi latérale interne 66.

L'installation 10 comprend, pour chaque ouverture 70, un tube d'aspiration 80. Dans le présent exemple de réalisation, l'installation comprend deux ouvertures 70 dans la couronne d'aspiration 54 et deux tubes d'aspiration 80 associés. Chaque tube d'aspiration 80 comprend une première portion tubulaire 82 dont le diamètre extérieur correspond sensiblement au diamètre de la portion cylindrique 74 et se prolongeant par une seconde portion tubulaire 84 de diamètre extérieur plus élevé. La première portion tubulaire 82 pénètre dans la portion cylindrique 74 de l'ouverture 70 correspondante et vient en butée contre l'épaulement 78. Le tube 80 est creux, les première et seconde portions tubulaires 82, 84 étant traversées par une ouverture cylindrique 86, d'axe D', dont le diamètre correspond au diamètre de la portion cylindrique 72 de l'ouverture 70. La portion annulaire externe 14 du couvercle 12 comprend des ouvertures 88 permettant le passage des tubes 80. Une paroi 89 enveloppe le tube 80 du côté du couvercle 12 opposé au creuset 30. Les extrémités des tubes d'aspiration 80 opposées à la couronne d'aspiration 54 sont reliées à un système de pompage, non représenté. Chaque tube d'aspiration 80 a une longueur supérieure à un seuil donné, et au moins supérieure au diamètre de la couronne d'aspiration 54, pour obtenir un gradient de température suffisant des gaz aspirés entre les deux extrémités du tube 80. A titre d'exemple, les tubes 80 sont en graphite, en un matériau composite type carbone-carbone, ou en inox massif.

La couronne d'aspiration 54 est reliée au couvercle 12 par des griffes 90. Chaque griffe 90 comprend une première extrémité vissée à la couronne d'aspiration 54 et une seconde extrémité vissée à la portion annulaire extérieure 14 du couvercle 12 par une vis 92. Plus précisément, dans le présent exemple de réalisation, chaque griffe 90 comprend une portion centrale plane 94 qui s'étend parallèlement à l'axe D et se prolonge aux extrémités par des portions d'extrémité inférieure et supérieure 96, 98 s'étendant sensiblement perpendiculairement à l'axe D. La portion d'extrémité inférieure 96 s'étend sous la couronne d'aspiration 54 et est fixée à celle-ci par une vis, non visible sur les figures 1 et 2, et la portion d'extrémité supérieure 98 s'étend sensiblement parallèlement à la portion annulaire extérieure 14 du couvercle 12 à laquelle elle est vissée par la vis 92 correspondante.

Un exemple de procédé de purification consiste à alimenter le creuset 30 en morceaux de silicium, le creuset 30 pouvant, pour ce faire, être éloigné de la couronne d'aspiration 54 et à faire fondre les morceaux de silicium dans le creuset 30 par le système de chauffage. Le creuset 30 est alors déplacé jusqu'à venir à proximité de la couronne d'aspiration 54, le bord supérieur du creuset 30 étant, par exemple, sensiblement tangent à la face inférieure 65 de la couronne d'aspiration 54. Le creuset 30, la couronne d'aspiration 54, le déflecteur 58 et l'insert 56 définissent alors le volume de confinement 69 au dessus de la surface libre 46 du bain de silicium 44. La torche à plasma 40 est alors activée pour purifier le silicium fondu. Les composés gazeux issus de la purification du silicium, et les particules formées par condensation de ces composés, sont aspirés par les ouvertures 70 de la couronne d'aspiration 54, l'atmosphère étant renouvelée par du gaz neutre provenant du reste de l'enceinte et pénétrant, par exemple, par l'interstice 100 qui sépare le creuset 30 de la couronne d'aspiration 54. L'aspiration de gaz dans le volume de confinement crée une légère dépression dans celui-ci, ce qui limite les fuites de composés gazeux issus de la purification du silicium, et de particules formées par condensation de ces composés, hors du volume de confinement 69 dans le reste de l'enceinte. Selon une variante, la fusion des morceaux de silicium dans le creuset 30 peut être réalisée directement par la torche à plasma 40. Selon une autre variante, les phases d'alimentation en morceaux de silicium et de fusion du silicium sont réalisées alors que le creuset 30 est maintenu à une position fixe à proximité de la couronne d'aspiration 54, comme cela est représenté en figure 1.

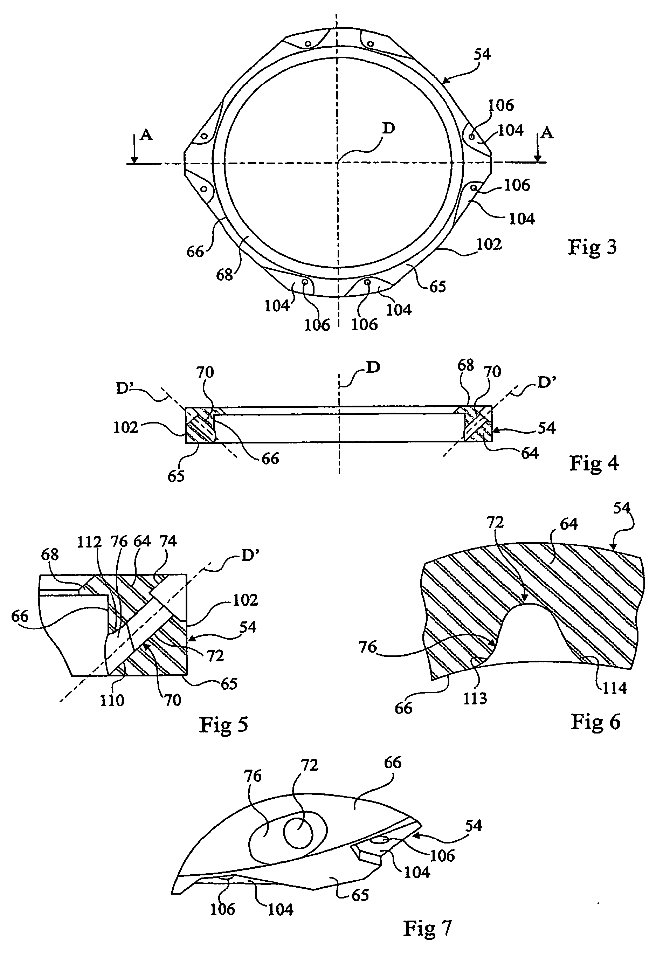

La figure 3 est une vue de dessous schématique d'un exemple de réalisation de la couronne d'aspiration 54. La figure 4 est une coupe de la figure 3 selon la ligne A-A et les figures 5, 6 et 7 sont respectivement une coupe selon un plan contenant les axes D et D', une coupe selon un plan perpendiculaire à l'axe D et une vue en perspective agrandies de la couronne d'aspiration 54 au niveau de l'une des ouvertures 70. Comme cela apparaît en figure 3, la couronne d'aspiration 54 comprend une paroi latérale externe 102 dont la forme est complexe et répond à des contraintes d'encombrement, de tenue mécanique de la couronne d'aspiration 54, etc. Dans le présent exemple de réalisation, le corps 54 comprend uniquement deux ouvertures d'aspiration 70 disposées de façon diamétralement opposée. Toutefois, il est clair que le corps 54 peut comprendre plus de deux ouvertures d'aspiration. A titre d'exemple, la couronne d'aspiration 54 est en graphite ou en un matériau composite type carbone-carbone, ou en inox massif.

La couronne d'aspiration 54 comprend des évidements 104, ou encoches, sur sa face inférieure 65 qui débouchent sur la paroi latérale externe 102. Chaque évidement 104 forme un logement destiné à recevoir la portion inférieure 96 de l'une des griffes 90. Une ouverture 106, s'étendant parallèlement à l'axe D, traverse la couronne d'aspiration 54 sur toute son épaisseur et débouche au niveau de chaque évidement 104. La vis de fixation de la portion inférieure 96 de la griffe 90 est disposée dans l'ouverture 106, la portion inférieure 96 de la griffe 90 étant prise en sandwich entre la tête de la vis et la couronne d'aspiration 54. L'extrémité libre de la vis dépasse de l'ouverture 106 du côté de la couronne d'aspiration 54 opposé à la portion inférieure 96 de la griffe 90 et est maintenue à cette extrémité en saillie par un boulon. La profondeur de chaque évidement 104 selon l'axe D est supérieure à l'épaisseur de la portion inférieure 96 de la griffe 90 correspondante de sorte que la griffe 90 ne se projette pas, selon l'axe D, en saillie depuis la face inférieure 65 de la couronne d'aspiration 54. Ceci permet de réduire l'encombrement de l'ensemble de la structure constituée de la couronne d'aspiration 54 et des griffes 90.

La Demanderesse a mis en évidence que les risques les plus élevés de condensation sur les parois du système de confinement 50 de composés gazeux issus de la purification du matériau semiconducteur, ou de dépôt sur les parois du système de confinement 50 de particules en suspension formées par condensation de ces composés gazeux existent au niveau de l'extrémité de chaque ouverture 70 qui débouche dans le volume de confinement 69. Pour réduire ces risques, l'extrémité débouchante de chaque ouverture 70 correspond à une portion évasée 76. La portion évasée 76 peut avoir une forme relativement complexe à rayon de courbure variable. A titre d'exemple, dans le plan de coupe de la figure 5, la portion inférieure 110 de la portion évasée 76 est rectiligne, sensiblement dans le prolongement de l'ouverture cylindrique 72 et n'est pas tangente à la paroi latérale 66 (le rayon de courbure au niveau du raccord entre la paroi latérale 66 et la portion inférieure 110 est sensiblement nul). Dans le plan de coupe de la figure 5, la portion supérieure 112 de la portion évasée 76 a un rayon de courbure compris entre 1/3 et 4/3 du diamètre de l'ouverture cylindrique 72, est tangente à l'ouverture cylindrique 72 et n'est pas tangente à la paroi 66 (le rayon de courbure au niveau du raccord entre la paroi latérale 66 et la portion supérieure 112 est sensiblement nul). Plus précisément, dans le plan de la figure 5, la portion supérieure 112 de la portion évasée 76 est tangente, à l'extrémité débouchant sur la paroi 66, à la face 60 du déflecteur 58. Dans le plan de la figure 6, perpendiculaire à l'axe D et coupant la portion évasée 76 de l'ouverture 70 sensiblement à mi-hauteur, les portions latérales 113, 114 de la portion évasée 76 sont tangentes à la paroi latérale 66 et ont un rayon de courbure compris entre 1/3 et 4/3 du diamètre de l'ouverture cylindrique 72. De façon générale, la portion évasée 76 est partout tangente à la paroi latérale 66 sauf en partie extrême haute et partie extrême basse dans le plan de la figure 5 et présente un rayon de courbure au niveau du raccord avec la paroi latérale 66 qui croît depuis les extrémités haute et basse jusqu'aux extrémités latérales. En outre, la portion évasée 76 est partout tangente à l'ouverture cylindrique 72.

Dans le présent exemple de réalisation, les ouvertures 70 et 86 sont rectilignes et alignées selon l'axe D'. En outre, les axes D' sont inclinés de quelques dizaines de degrés par rapport à l'axe D, par exemple d'environ 45°. Ceci facilite le nettoyage des ouvertures 70, 86 par l'utilisation d'un système de nettoyage comprenant, par exemple, une tige déplacée par des actionneurs hydrauliques ou pneumatiques et munie d'un embout adapté à nettoyer les parois internes des ouvertures 70, 86, la tige étant introduite par l'extrémité supérieure de l'ouverture 86 et étant déplacée dans les ouvertures 86 et 70 jusqu'à déboucher par l'ouverture 70. A titre d'exemple, la tige de nettoyage est creuse de façon à permettre l'écoulement de gaz dans les ouvertures 86, 70 pendant une opération de nettoyage. Une opération de nettoyage peut alors être réalisée pendant le fonctionnement de l'installation. Entre deux opérations de nettoyage, la tige de nettoyage peut être disposée dans un logement distinct des ouvertures 70, 86 pour ne pas perturber l'écoulement des gaz dans les ouvertures 70, 86. L'opération de nettoyage peut ainsi être avantageusement réalisée sans nécessiter le démontage du système de confinement 50. L'utilisation d'ouvertures 70, 86 rectilignes permet, en outre, de limiter les pertes de charge.

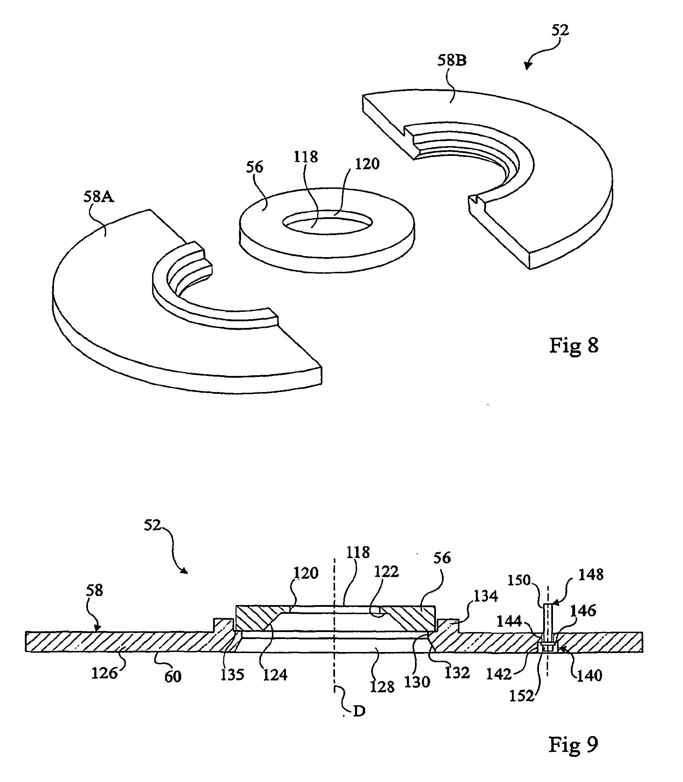

Les figures 8 et 9 représentent respectivement une vue en perspective éclatée et une coupe de l'écran de protection 52. Dans le présent exemple de réalisation, l'insert 56 correspond à une pièce monobloc constituée d'un matériau non conducteur de l'électricité, résistant aux contraintes thermiques et inerte chimiquement. Ceci permet d'éviter tout phénomène de couplage avec la torche à plasma 40 et une détérioration de l'insert 56 en raison des contraintes thermiques importantes dues au fonctionnement de la torche à plasma 40. A titre d'exemple, l'insert 56 peut être en silice, en alumine recouvert de silice, en graphite, etc. Selon une variante, l'insert 56 peut être constitué de plusieurs secteurs reliés les uns aux autres. L'insert 56 correspond à une pièce annulaire traversée par une ouverture 118 délimitée par une première paroi cylindrique 120, située en partie supérieure de l'insert 56, dont le diamètre est légèrement supérieur au diamètre extérieur de la buse 42 de la torche à plasma 40, la paroi cylindrique 120 se prolongeant vers le bas par un épaulement 122 puis par une paroi tronconique 124 qui s'ouvre vers le bas. La buse 42 de la torche à plasma 40 s'étend dans la portion cylindrique 120, l'extrémité de la buse 42 étant positionnée au niveau de la paroi tronconique 124. L'insert 56 joue le rôle d'écran lors du fonctionnement de la torche à plasma 40 et protège le déflecteur 58 contre les forts gradients de températures. Ceci permet de privilégier d'autres propriétés pour le matériau constituant le déflecteur 58.

Dans le présent exemple de réalisation, le déflecteur 58 est constitué de deux secteurs 58A, 58B. Les secteurs 58A, 58B sont constitués d'un matériau présentant une bonne tenue mécanique dans le temps à haute température, et inerte chimiquement par rapport au matériau semiconducteur contenu dans le creuset 30. Les secteurs 58A, 58B sont, par exemple, en graphite, en matériau composite carbone-carbone ou en silice vitreuse. Lorsque les secteurs 58A, 58B sont assemblés, le déflecteur 58 a la forme d'un anneau plat 126 traversé par une ouverture 128 délimitée par une paroi cylindrique 130 se prolongeant, vers le bas, par une paroi tronconique 132 qui s'ouvre vers le bas. Un bourrelet annulaire 134 se projette depuis la plaque 126 du côté du déflecteur 58 opposé au creuset 30. Le diamètre intérieur du bourrelet 134 est légèrement supérieur au diamètre extérieur de l'insert 56. Le diamètre de la paroi cylindrique 130 est inférieur au diamètre extérieur de l'insert 56 de sorte que la paroi cylindrique 130 et le bourrelet 134 délimitent un épaulement 135. L'insert 56 repose sur l'épaulement 135, le bourrelet 134 assurant le centrage de l'insert 56. La séparation du déflecteur 58 en secteurs distincts facilite le montage du déflecteur 58. En outre, lorsque le déflecteur 58 est constitué d'un matériau électriquement conducteur, les secteurs 58A, 58B peuvent être isolés électriquement les uns des autres pour éviter l'apparition de courants dans le déflecteur 58. Le déflecteur 58 est traversé par des ouvertures 140 (une seule ouverture 140 étant représentée en figure 9) constituées chacune de deux portions cylindriques 142, 144 de diamètres différents reliées par un épaulement 146, la portion de plus grand diamètre étant orientée du côté du bain de silicium 44. Une vis 148, comprenant une tige filetée 150 et une tête 152, est disposée dans l'ouverture 140, la tige 150 étant orientée vers le haut de façon que la tête 152 soit en butée contre l'épaulement 146. La tige filetée 150 est vissée dans une ouverture filetée prévue au niveau de la portion annulaire interne 16 du couvercle 12. Le déflecteur 58 repose donc sur les têtes 152 des vis 150.

De préférence, le matériau constituant le déflecteur 58 est peu conducteur thermiquement. Ceci facilite l'élévation de la température de la face 60 du déflecteur 58 opposée à la surface libre 46 du bain de silicium 44 lors de l'étape de purification. A titre d'exemple, lorsque le déflecteur 58 est en graphite, pour une température de bain de silicium 44 de l'ordre de 1500°C, la face 60 peut atteindre des températures de l'ordre de 1200°C à 1300°C. Lorsque le déflecteur 58 est en matériau composite, la face 60 du déflecteur 58 peut atteindre des températures plus élevées. La face 60 du déflecteur 58 étant en contact avec les composés gazeux issus de la purification du matériau semiconducteur, le fait qu'elle soit à des températures élevées permet de réduire les risques de condensation des composés gazeux sur la face 60 et rend plus difficile l'accroche de particules en suspension sur cette paroi.

Des modes de réalisation particuliers de la présente invention ont été décrits. Diverses variantes et modifications apparaîtront à l'homme de l'art. En particulier, le déflecteur 58, ou au moins une partie de celui-ci, et la couronne d'aspiration 54 peuvent correspondre à une même pièce.

## Revendications

1. Installation (10) de purification d'un matériau semiconducteur (44) comprenant au moins une enceinte contenant une atmosphère d'au moins un gaz neutre, et comprenant, dans l'enceinte :
un creuset (30) destiné à contenir le matériau semiconducteur à l'état fondu ;
une torche à plasma (40) destinée à éliminer des impuretés du matériau semiconducteur fondu dans le creuset ; et
un système de confinement (50) destiné à délimiter un volume de confinement (69) entre le creuset et la torche à plasma, le système de confinement comprenant un système (54) d'évacuation de composés gazeux et/ou de particules issus de la purification du silicium fondu,
**caractérisée en ce que** le système d'évacuation comprend au moins une ouverture d'aspiration (70) ayant une portion cylindrique (72) se prolongeant par une portion évasée (76) débouchant dans le volume de confinement.

2. Installation de purification selon la revendication 1, comprenant un système de nettoyage de l'ouverture d'aspiration (70) adapté à réaliser une opération de nettoyage de l'ouverture pendant le fonctionnement de la torche à plasma (40).

3. Installation de purification selon la revendication 1 ou 2, dans laquelle le système de confinement (50) comprend une première portion annulaire (54) à la périphérie du volume de confinement (69) comprenant une paroi latérale interne (66), la portion évasée (76) débouchant au niveau de la paroi latérale interne.

4. Installation de purification selon l'une quelconque des revendications précédentes, comprenant un tube (80) creux prolongeant l'ouverture (70) du côté opposé à la portion évasée (76), la longueur du tube étant supérieure au diamètre de la portion annulaire.

5. Installation de purification selon la revendication 4, dans laquelle la torche à plasma (40) est orientée selon une première direction (D), le tube (80) étant rectiligne et s'étendant selon une seconde direction (D') inclinée par rapport à la première direction d'un angle compris entre 20° et 90°.

6. Installation de purification selon la revendication 3, dans laquelle l'enceinte comprend un couvercle (12), la première portion annulaire (54) ayant une face (65) du côté opposé au couvercle, l'installation comprenant des griffes (90) réparties à la périphérie externe de la première portion annulaire (54), chaque griffe étant fixée à ladite face et au couvercle.

7. Installation de purification selon la revendication 3, dans laquelle le système de confinement (50) comprend en outre :
une deuxième portion annulaire (56) d'un premier matériau entourant la torche à plasma (40) ; et
une troisième portion annulaire (58) d'un second matériau différent du premier matériau, entourant la deuxième portion annulaire et comprenant une paroi (60) destinée à être en vis-à-vis du matériau semiconducteur (44), la première portion annulaire (54) entourant la troisième portion annulaire.

8. Installation de purification selon la revendication 7, dans laquelle la troisième portion annulaire (58) est constituée d'au moins deux secteurs (58A, 58B) reliés l'un à l'autre.

9. Installation de purification selon la revendication 7 ou 8, dans laquelle la portion évasée (76) est tangente au plan contenant la paroi (60) de la troisième portion annulaire (58).

10. Installation de purification selon l'une quelconque des revendications 7 à 9, dans laquelle la portion évasée (76) est partout tangente à la paroi interne (66) de la première portion annulaire (54) à l'exception de la partie la plus proche et de la partie la plus éloignée de la paroi (60) de la troisième portion annulaire (58).

## Claims

1. An installation (10) for purifying a semiconductor material (44), comprising at least one enclosure containing an atmosphere of at least one neutral gas, and comprising, in the enclosure:
a crucible (30) intended to contain the semiconductor material in molten state;
a plasma torch (40) intended to remove impurities from the molten semiconductor material in the crucible; and
a confinement system (50) intended to define a confinement volume (69) between the crucible and the plasma torch, the confinement system comprising a system (54) for discharging gaseous compounds and/or particles resulting from the purification of the molten silicon,
**characterized in that** the discharge system comprises at least one suction opening (70) having a cylindrical portion (72) extending in a flared portion (76) emerging into the confinement volume.

2. The purification installation of claim 1, comprising a system for cleaning the suction opening (70) capable of carrying out a cleaning operation on the opening during the operation of the plasma torch (40).

3. The purification installation of claim 1 or 2, wherein the confinement system (50) comprises a first ring-shaped portion (54) at the periphery of the confinement volume (69), comprising an internal lateral wall (66), the flared portion (76) emerging at the level of the internal lateral wall.

4. The purification installation of any of the foregoing claims, comprising a hollow tube (80) continuing the opening (70) on the side opposite to the flared portion (76), the length of the tube being greater than the diameter of the ring-shaped portion.

5. The purification installation of claim 4, wherein the plasma torch (40) is oriented along a first direction (D), the tube (80) being rectilinear and extending along a second direction (D') inclined with respect to the first direction by an angle ranging between 20° and 90°.

6. The purification installation of claim 3, wherein the enclosure comprises a cover (12), the first ring-shaped portion (54) having a surface (65) on the side opposite to the cover, the installation comprising claws (90) distributed at the external periphery of the first ring-shaped portion (54), each claw being attached to said surface and to the cover.

7. The purification installation of claim 3, wherein the confinement system (50) further comprises:
a second ring-shaped portion (56) of a first material surrounding the plasma torch (40); and
a third ring-shaped portion (58) of a second material different from the first material, surrounding the second ring-shaped portion and comprising a wall (60) intended to face the semiconductor material (44), the first ring-shaped portion (54) surrounding the third ring-shaped portion.

8. The purification installation of claim 7, wherein the third ring-shaped portion (58) is formed of at least two sectors (58A, 58B) connected to each other.

9. The purification installation of claim 7 or 8, wherein the flared portion (76) is tangent to the plane containing the wall (60) of the third ring-shaped portion (58).

10. The purification installation of any of claims 7 to 9, wherein the flared portion (76) is tangent at all points to the internal wall (66) of the first ring-shaped portion (54) except on the portions which are closest to and most distant from the wall (60) of the third ring-shaped portion (58).

## Patentansprüche

1. Anlage (10) zum Reinigen eines Halbleitermaterials (44), welche zumindest ein Gehäuse aufweist, welches eine Atmosphäre aus mindestens einem neutralen Gas enthält, und in dem Gehäuse folgendes aufweist:
einen Schmelztiegel (30), der vorgesehen ist, um das Halbleitermaterial in geschmolzenem Zustand zu halten;
eine Plasmafackel (40), die vorgesehen ist, um Verunreinigungen aus dem geschmolzenem Halbleitermaterial im Schmelztiegel zu entfernen; und
ein Eindämmungssystem (50), welches vorgesehen ist, um ein Eindämmungsvolumen (69) zwischen dem Schmelztiegel und der Plasmafackel zu definieren, wobei das Eindämmungssystem ein System (54) zum Auslassen von gasförmigen Verbindungen und/oder Partikeln aufweist, die aus der Reinigung des geschmolzenen Siliziums resultieren,
**dadurch gekennzeichnet, dass** das Auslasssystem zumindest eine Ansaugöffnung (70) mit einem zylindrischen Teil (72) aufweist, der sich in einen erweiterten Teil (76) erstreckt, der sich in das Eindämmungsvolumen öffnet.

2. Reinigungsanlage nach Anspruch 1, die ein System zum Reinigen der Ansaugöffnung (70) aufweist, welches fähig ist, einen Reinigungsvorgang an der Öffnung während des Betriebs der Plasmafackel (40) auszuführen.

3. Reinigungsanlage nach Anspruch 1 oder 2, wobei das Eindämmungssystem (50) einen ersten Ringförmigen Teil (54) am Umfang des Eindämmungsvolumens (69) aufweist, der eine innere Seitenwand (66) aufweist, wobei sich der erweiterte Teil (76) auf dem Niveau der inneren Seitenwand öffnet.

4. Reinigungsanlage nach einem der vorhergehenden Ansprüche, die ein hohles Rohr (80) aufweist, welches die Öffnung (70) auf der Seite gegenüberliegend zum erweiterten Teil (76) fortführt, wobei die Länge des Rohrs größer ist als der Durchmesser des ringförmigen Teils.

5. Reinigungsanlage nach Anspruch 4, wobei die Plasmafackel (40) entlang einer ersten Richtung (D) orientiert ist, und wobei das Rohr (80) geradlinig ist und sich entlang einer zweiten Richtung (D') erstreckt, die bezüglich der ersten Richtung um einen Winkel geneigt ist, der zwischen 20° und 90° liegt.

6. Reinigungsanlage nach Anspruch 3, wobei das Gehäuse eine Abdeckung (12) aufweist, wobei der erste ringförmige Teil (54) eine Oberfläche (65) an der Seite gegenüberliegend zur Abdeckung besitzt, wobei die Anlage Klauen (90) aufweist, die am Außenumfang des ersten ringförmigen Teils (54) verteilst sind, wobei jede Klaue an der Oberfläche und an der Abdeckung angebracht ist.

7. Reinigungsanlage nach Anspruch 3, wobei das Eindämmungssystem (50) weiter folgendes aufweist:
einen zweiten ringförmigen Teil (56) eines ersten Materials, der die Plasmafackel (40) umgibt; und
einen dritten ringförmigen Teil (58) eines zweiten Materials, welches sich vom ersten Material unterscheidet, welche den zweiten ringförmigen Teil umgibt und eine Wand (60) aufweist, die vorgesehen ist, um zum Halbleitermaterial (44) zu weisen, wobei der erste ringförmige Teil (54) den dritten ringförmigen Teil umgibt.

8. Reinigungsanlage nach Anspruch 7, wobei der dritte ringförmige Teil (58) aus mindestens zwei Sektoren (58A, 58B) geformt ist, die miteinander verbunden sind.

9. Reinigungsanlage nach Anspruch 7 oder 8, wobei der erweiterte Teil (76) tangential an der Ebene liegt, welche die Wand (60) des ringförmigen Teils (58) enthält.

10. Reinigungsanlage nach einem der Ansprüche 7 bis 9, wobei der erweiterte Teil (76) an allen Punkten zur Innenwand (66) des ersten ringförmigen Teils (54) tangential liegt, außer an den Teilen, die am nächsten zu und am weitesten entfernt von der Wand (60) des dritten ringförmigen Teils (58) liegen.
